(19) Europäisches Patentamt

European Patent Office

Office européen des brevets

(11) Publication number: **0 518 481 A1**

## (12) EUROPEAN PATENT APPLICATION

(21) Application number: **92304213.9**

(22) Date of filing: **11.05.92**

(51) Int. Cl.5: **G11B 17/32**

(30) Priority: **13.06.91 KR 9110020**

(43) Date of publication of application:
**16.12.92 Bulletin 92/51**

(84) Designated Contracting States:
**DE GB NL**

(71) Applicant: **SAMSUNG ELECTRONICS CO., LTD.**
**416 Maetan-Dong Kwonsun-Gu**
**Suwon-City Kyounggi-Do(KR)**

(72) Inventor: **Ju, Jae-man**
**57-18, Seongsu 2-ga 4-dong, Seongdong-ku**
**Seoul(KR)**

(74) Representative: **Stanley, David William et al**
**APPLEYARD LEES 15 Clare Road**
**Halifax West Yorkshire HX1 2HY(GB)**

(54) **Disk stabilizing apparatus for optical disk player.**

(57) A disk stabilizing apparatus for an optical disk player is disclosed which comprises at least one stabilizer 18 having a contact member 19 in soft contact with the surface of an optical disk 1. The contact member may be of various forms, e.g. a brush made with fibre bundles and a roller 19' made of sponge or soft rubber. The stabilizer is detachable and is installed on a conveyer 8 of an optical pickup 6 so as to keep a close and constant distance from the optical pickup, thereby absorbing or suppressing the vibration of the optical disk.

FIG.6

The present invention relates to a disk stabilizing apparatus, and is concerned particularly, although not exclusively, with such apparatus for a disk player which uses a disk-shaped recording medium such as a compact disk, and more particularly to a disk stabilizing apparatus for an optical disk player.

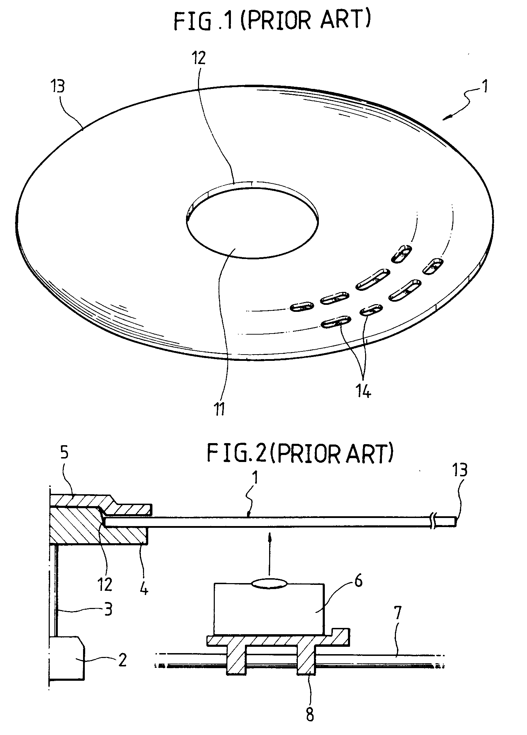

Generally, as shown in Figure 1 of the accompanying diagrammatic drawings, a compact disk 1, which is in the shape of a planar cross-section of a doughnut, has a central hole 11 to define an innermost edge portion 12 in the radial direction and an outermost edge portion 13. The disk stores information by way of the arrangement of countless long and short pits 14 formed along a spiral track.

Referring now to Figure 2 of the accompanying diagrammatic drawings, innermost portion 12 of compact disk 1 is placed on a turntable 4 fixed to a rotating axis 3 of a spindle motor 2 and is clamped by a clamp 5, so as to be rotated together with the rotating axis. An optical pickup 6 located under compact disk 1 is mounted on a conveyer 8 fitted with a conveying guide rod 7 and is moved by an operating device (not shown) in the disk's radial direction so as to irradiate a light beam 9 onto compact disk 1 and detect information loaded on light reflected by the disk as an electrical reproducing signal. Usually, such a compact disk player requires stable operation within a frequency band of tens of KHz, and requires extremely stable operation within a frequency band of several KHz, so as to enable clean playback. The reason for this is that, since the width and depth of the pits 14 are very minute, if vibration occurs due to any factor, track access time to seek an objective track is delayed and frequent tracking/focusing errors occur within the accessed objective track. Thus, for a high speed search and clean playback, vibration of the compact disk should be suppressed so that the compact disk is rotated in a full circle in the focal plane of the optical pickup.

However, in an arrangement as shown in Figure 2, compact disk 1 in a player has a vibration mode and a natural frequency depending upon the boundary condition wherein the disk's innermost portion 12 in the radial direction works as a fixed edge engaged with the rotating axis of the spindle motor by the clamping of the turntable and clamp, and its outermost portion 13 in the radial direction works as an unconstrained free edge. Therefore, during rotation, the disk continues to vibrate due to external or internal excitation source as long as they are present, and may even resonate if the excitation source has the same period as that of its natural frequency. An example of an internal excitation source is a power transformer, while a speaker may be given as an example of an external excitation source.

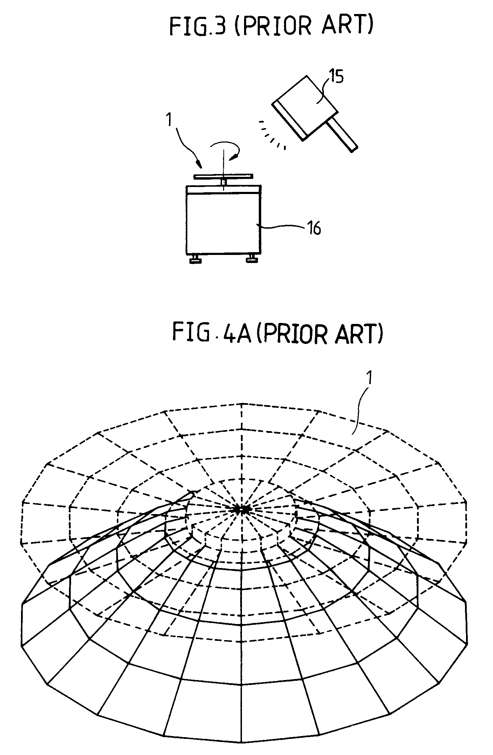

Figure 3 of the accompanying diagrammatic drawings shows an apparatus for measuring vibration modes and the natural frequency of compact disk 1, using a stroboscope 15 and an exciter 16.

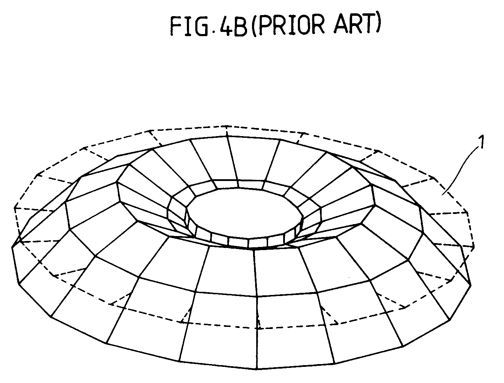

Figures 4A and 4B of the accompanying diagrammatic drawings illustrate the vibration features of a 12Omm compact disk measured by the apparatus of Figure 3, Figure 4A showing the vibration feature of a first warping type of vibration and Figure 4B showing that of a second warping type. The natural frequencies of the first and second warping types of vibration are measured as 120-13OHz and 700-8OOHz, respectively. That is, in a conventional compact disk player, since natural frequencies of the disk exist below 1KHz, high speed search and precise control are difficult and skipping frequently occurs.

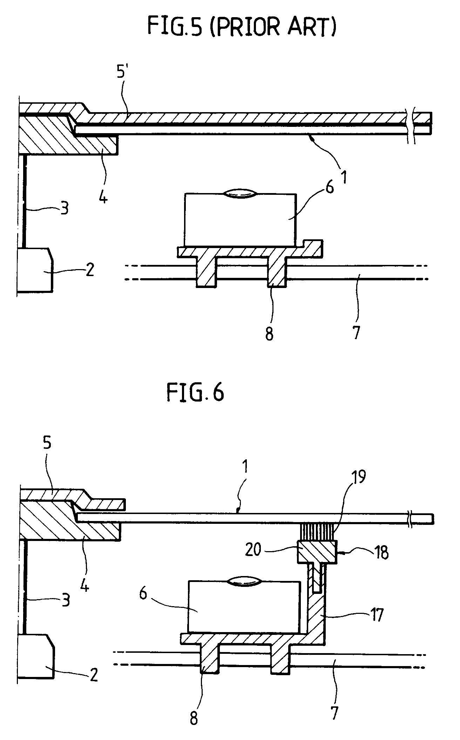

In the conventional compact disk player, in order to prevent such vibration of the disk, compact disk 1 mounted on turntable 8 is clamped by a wide clamp 5' to reduce the self-resonance of the disk, as shown in Figure 5 of the accompanying diagrammatic drawings (e.g. Japanese product PIONEER model PD-9010X). In this structure, the natural frequency of compact disk becomes higher than that of Figure 2 and the degree of displacement is reduced so that to some extent, stable operation can be performed. However, clamp 5' should be stronger than the compact disk and be precisely processed. If it is not precise, there is the possibility of even more severe vibration.

As samples of other conventional products from Japan, there are AKAI's model CA-A70 whose cabinet is made of a new anti-resonance metal, SONY's model CDP-103 whose main chassis is made by moulding resin of a ceramic powder and metal, and AKAI's model CDA-70 adapting an insulated pedestal made of a new anti-resonance rubber. These are designed to absorb external vibration rather than to suppress the self-vibration of the disk. Hence they are not useful to suppress the vibration internally present within the disk itself.

Preferred embodiments of the present invention aim to provide a disk stabilizing apparatus for an optical disk player which suppresses the vibration of the compact disk, so as to realize a high speed search and clean playback.

According to one aspect of the present invention, there is provided a disk stabilizing apparatus for an optical disk player having a disk driver in which an optical disk is mounted and an optical pickup installed on a conveyer to be movable parallel to the plane of said optical disk, said disk stabilizing apparatus comprising at least one stabilizer having a contact member in soft contact with one side of said optical disk mounted in said disk driver and a support for supporting said stabilizer at a predetermined height, so as to absorb or suppress vibration of said optical disk.

Preferably, said contact member is carried on a connecting member which is detachable from said support.

Preferably, said support is integrally formed with said conveyer so that said stabilizer is conveyed together with said optical pickup.

Said contact member may be in the form of a brush comprising a plurality of fibre bundles.

Said contact member may be in the form of a roller which is arranged to rotate while in contact with said optical disk.

The invention extends to an optical disk player provided with a disk stabilizing apparatus according to any of the preceding aspects of the invention.

According to another aspect of the present invention, there is provided a stabilizing apparatus for damping vibrations in a rotating disk, the apparatus comprising a stabilizer having a contact member in soft contact with one side of the disk, to absorb vibrations therein.

Such an apparatus may further comprise any one or more of the features disclosed in the accompanying specification, claims, abstract and/or drawings, in any combination.

For a better understanding of the invention, and to show how the same may be carried into effect, reference will now be made, by way of example, to Figures 6 to 8 of the accompanying diagrammatic drawings, in which:

Figure 6 is a cross-sectional side view of one example of a disk stabilizer for a disk player according to the present invention;

Figure 7 is a partially-separated sectional view illustrating the supporting structure of the stabilizer shown in Figure 6; and

Figures 8A and 8B illustrate other embodiments of the stabilizer of Figure 6.

In the figures, like reference numerals denote like or corresponding parts.

In Figure 6, reference numeral 1 denotes a horizontal optical disk, 2 a spindle motor, 3 a vertical rotating axis, 4 a turntable, 5 a clamp, 6 an optical pickup, 7 a conveying guide rod, and 8 denotes a conveyer. Here, a manner similar to that of a conventional disc player, conveyer 8 mounting optical pickup 6 is connected to an operating device (not shown) to move along conveying guide rod 7 passing through the conveyer 8. From conveyer 8, and as a continuous body thereof, a support 17 is extended for supporting a stabilizer 18. This stabilizer has soft slender contact members 19 which are composed of, for example, a plurality of fibre bundles. Contact members 19 are supported by support 17 via a connecting member 20 and simultaneously are slightly in contact with optical disk 1. Thus, due to contact members 19 being in soft contact, the planar vibration of optical disk 1 may be absorbed, and may be suppressed prior to acceleration. The stabilizer 18 moves along with optical pickup 6. That is, since contact members 19 of stabilizer 18 are in contact with optical disk 1, and are always close to the optical pickup, the vibration of optical disk 1 can be effectively absorbed and/or suppressed. More stabilizers will increase the effect of the absorption and/or suppression of the disk's vibration.

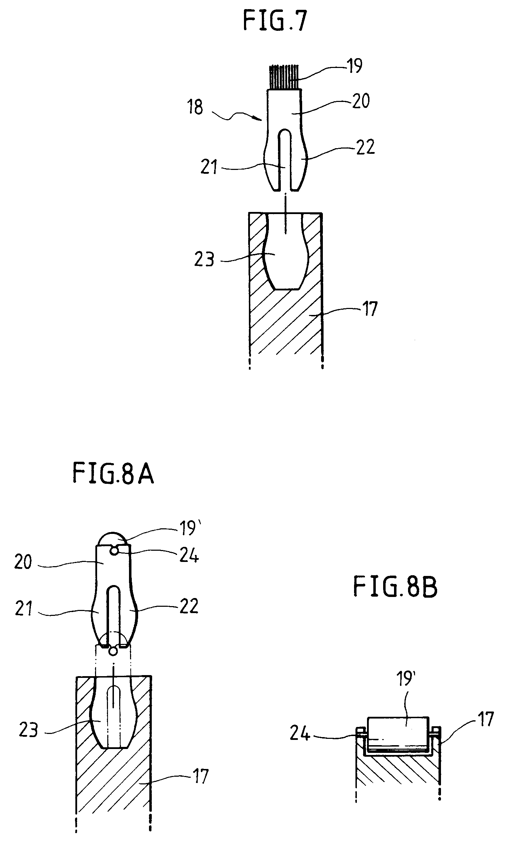

Referring to Figure 7, stabilizer 18 is divided into two segments by a slit 21 located in the lower part of connecting member 20, has an enlarged tab 22 formed around slit 21, and has a joint groove 23 formed corresponding to tab 22, so as to be detachable. Therefore, if stabilizer 18 becomes worn, deformed, or useless due to dust or dirt, it is replaceable. The stabilizer engages as a snap-fit in support 17 due to tab 22 is resiliently engaging joint groove 23.

Referring now to Figures 8A and 8B, showing other stabilizers, a contact member 19' making contact with the optical disk is not in the form of fibre bundles but is constituted by a roller made of sponge or soil rubber. In Figure 8A, the roller-shaped contact member 19' is movably supported by a pin 24 on the upper end of connecting member 20. In Figure 8B, roller-shaped contact member 19' having a pin 24 is directly installed on the upper end of support 17. In these embodiments, pin 24 is oriented along the radius of the optical disk so that contact member 19' is rotated while in contact with the optical disk. The rollers 19' make resilient contact with the respective optical disks. Other resilient contact means may be provided.

As described above in detail, the illustrated embodiments of the present invention pertain to a stabilizing apparatus for absorbing or suppressing the vibrations of an optical disk for an optical disk player. The stabilizing apparatus absorbs or suppresses planar (or warping) vibration occurring due to an excitation source during the rotating of the optical disk by keeping the distance between the optical disk and pickup constant, so that the stabilizing apparatus is very advantageous for high speed access as well as errorless, clean playback. In addition, a contact member in contact with the optical disk serves to remove dust from the disk's surface, so that separate cleaning of the optical disk is not needed.

Especially, in an optical disk player comprising a stabilizer as described above, when the natural frequency of the optical disk is under 1KHz, the absorbing or suppressing effect of the vibration of the optical disk may be considerable.

The invention is not restricted by the preferred embodiments thereof, and the appended claims may include various modifications. It can be also used for various machines having a rotating disk, such as an electric saw to absorb or suppress the vibration of its disk (blade).

In this specification, terms of absolute orientation are used conveniently to denote the usual orientation of items in normal use. However, such items could be disposed in other orientations, and in the context of this specification, terms of absolute orientation, such as "top", "bottom", "vertical" or "horizontal", etc. are to be construed accordingly, to include such alternative orientations.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A disk stabilizing apparatus for an optical disk player having a disk driver in which an optical disk (1) is mounted and an optical pickup (6) installed on a conveyer (8) to be movable parallel to the plane of said optical disk, said disk stabilizing apparatus comprising at least one stabilizer (18) having a contact member (19) in soil contact with one side of said optical disk mounted in said disk driver and a support (17) for supporting said stabilizer at a predetermined height, so as to absorb or suppress vibration of said optical disk.

2. A disk stabilizing apparatus as claimed in claim 1, wherein said contact member (19) is carried on a connecting member (20) which is detachable from said support (17).

3. A disk stabilizing apparatus as claimed in claim 1 or 2, wherein said support (17) is integrally formed with said conveyer (8) so that said stabilizer (18) is conveyed together with said optical pickup (6).

4. A disk stabilizing apparatus as claimed in claim 1, 2 or 3, wherein said contact member (19) is in the form of a brush comprising a plurality of fibre bundles.

5. A disk stabilizing apparatus as claimed in claim 1, 2 or 3, wherein said contact member is in the form of a roller (19') which is arranged to rotate while in contact with said optical disk (6).

6. An optical disk player provided with a disk stabilizing apparatus according to any of the preceding claims.

7. Stabilizing apparatus for damping vibrations in a rotating disk, the apparatus comprising a stabilizer having a contact member in soil contact with one side of the disk, to absorb vibrations therein.

8. Apparatus according to claim 7, further comprising any one or more of the features disclosed in the accompanying specification, claims, abstract and/or drawings, in any combination.

FIG.1 (PRIOR ART)

FIG.2 (PRIOR ART)

FIG.3 (PRIOR ART)

FIG.4A (PRIOR ART)

FIG.4B(PRIOR ART)

## FIG.5 (PRIOR ART)

## FIG.6

## FIG.7

## FIG.8A

## FIG.8B

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 10, no. 3 (P-418)8 January  1986 & JP-A-60 160 059 ( TOSHIBA ) 21 August 1985 * abstract * | 1,6-8 | G11B17/32 |
| X | FR-A-2 304 137 (PHILIPS) * page 5, line 33 - page 6, line 30; claims; figures * | 1,6-8 | |
| A | PATENT ABSTRACTS OF JAPAN vol. 10, no. 160 (P-465)(2216) 7 June 1986 & JP-A-61 11 966 ( TOSHIBA ) * abstract * | 1,5 | |
| A | PATENT ABSTRACTS OF JAPAN vol. 10, no. 15 (P-422)(2072) 21 January 1986 & JP-A-60 170 065 ( TOSHIBA ) 3 September 1985 * abstract * | 1,5 | |
| A | GB-A-1 277 160 (AMPEX) * claim 1; figures * | 1,4 | TECHNICAL FIELDS SEARCHED (Int. Cl.5) — G11B |
| A | GB-A-2 018 488 (TDK) * page 1, line 62 - line 90; figures * | 1-3,6-8 | |
| A | US-A-4 726 007 (STEVEN A. MCCORMACK) * column 4, line 39 - column 7, line 15; claims; figures * | 1,6-8 | |

The present search report has been drawn up for all claims

| Place of search | Date of completion of the search | Examiner |
|---|---|---|
| THE HAGUE | 13 OCTOBER 1992 | SCHWANDER |